# EUROPÄISCHE PATENTSCHRIFT

(11) **EP 2 559 909 B1**
(45) Veröffentlichungstag und Bekanntmachung des Hinweises auf die Patenterteilung: **14.10.2015**
(21) Anmeldenummer: 12180769.7
(22) Anmeldetag: 17.08.2012
(51) Int. Cl.: F16D 55/226, F16D 65/18

(54) **Scheibenbremse für ein Nutzfahrzeug**
Disc brake for a commercial vehicle
Frein à disque pour un véhicule utilitaire

(30) Priorität: 19.08.2011 DE 102011111113
(43) Veröffentlichungstag der Anmeldung: 20.02.2013
(73) Patentinhaber: KNORR-BREMSE Systeme für Nutzfahrzeuge GmbH, 80809 München (DE)
(72) Erfinder: Asen, Alexander, 94428 Eichendor (DE)
(74) Vertreter: Schönmann, Kurt

(56) Entgegenhaltungen:
- EP-A1- 1 942 286
- EP-A1- 2 514 989
- WO-A1-2007/085441
- DE-A1- 10 304 713

## Beschreibung

Die Erfindung betrifft eine Scheibenbremse für ein Nutzfahrzeug gemäß dem Oberbegriff des Anspruchs 1, wie z.B. aus EP-A-1 942 286 hervorgeht.

Eine Scheibenbremse entsprechend der Gattung ist aus der WO 96/34216 bekannt. Darin ist dargestellt, dass zum Schutz eines Aufnahmeraumes, in dem Funktionsteile des Bremssattels, wie Stellspindeln einer Zuspanneinrichtung oder dergleichen aufgenommen sind, eine der Bremsscheibe zugewandte Montage- und Funktionsöffnung durch eine Verschlussplatte verschlossen ist. Darüber hinaus dient die Verschlussplatte als Tragteil diverser Anbauten, wie z.B. Faltenbälgen oder Dichtungen.
Um auftretende Funktionsbelastungen, insbesondere solche, die sich aus der Abstützung einer Druckfeder ergeben, mit der eine im Aufnahmeraum angeordnete, und die Stellspindeln aufnehmende Traverse bei einem Lösen der Bremse in eine Ausgangsstellung zurückdrückbar ist, aufnehmen zu können, muss die Verschlussplatte entsprechend dimensioniert sein. Dies vor allem, damit eine Verformung der Verschlussplatte vermieden wird, die ansonsten die Funktionsfähigkeit der Scheibenbremse insgesamt beeinträchtigen könnte.
Zur insofern biegesteifen Ausführung weist die Verschlussplatte, die üblicherweise als Blechformteil ausgebildet ist, bislang eine Wanddicke von etwa 1,75 mm auf.
Grundsätzlich gehen Forderungen dahin, gewichtsoptimierte Fahrzeugkomponenten einzusetzen, um so eine Verbesserung der Wirtschaftlichkeit des Fahrzeuges zu erreichen. Insbesondere durch steigende Kraftstoffpreise sowie ein verstärktes Umweltbewusstsein ist der Wunsch nach einer höheren Effizienz beim Transport von Gütern besonders ausgeprägt.
Zur diesbezüglichen Betriebskostenminimierung trägt maßgeblich die Reduzierung des Eigengewichts des Fahrzeuges bei, da mit geringem Eigengewicht mehr Nutzlast befördert werden kann, wodurch die Betriebskosten insgesamt gesenkt und die Umweltbelastungen durch geringeren Kraftstoffverbrauch reduziert werden.

Zu einer Gewichtsoptimierung trägt jedes entsprechend modifizierte Bauteil bei, wobei die bekannte Verschlussplatte dieser Forderung nicht entspricht.

Der Erfindung liegt die Aufgabe zugrunde, eine Scheibenbremse der gattungsgemäßen Art so weiterzuentwickeln, dass ihr Gewicht bei unveränderter Belastbarkeit reduziert wird.

Diese Aufgabe wird durch eine Scheibenbremse mit den Merkmalen des Anspruchs 1 gelöst.

Durch das erfindungsgemäße Einbringen von Verstärkungsrippen ist eine Maximierung der Belastungsfähigkeit der Verschlussplatte erreicht, bei gleichzeitig reduzierter Wandstärke. Neben einer dadurch erzielbaren Gewichtseinsparung, die zu einer Gewichtsoptimierung der Verschlussplatte führt und damit der Scheibenbremse insgesamt beiträgt, wird durch die mögliche Wanddickenreduzierung eine Materialeinsparung erreicht, die insoweit von besonderer Bedeutung ist, als es sich bei Bauteilen für Scheibenbremsen um Serienteile handelt, die in großen Stückzahlen hergestellt und eingesetzt werden.

Ein weiterer Vorteil ist darin zu sehen, dass die neue Verschlussplatte bezüglich der Fertigungskosten, also ohne Berücksichtigung des Materialeinsatzes, praktisch kostenneutral hergestellt werden kann.

Da, wie erwähnt, die Verschlussplatte üblicherweise als Blechform-Stanzteil hergestellt ist, können Verstärkungsrippen in einem Arbeitsgang eingebracht werden, lediglich durch entsprechende Anpassung des Stanz- bzw. Presswerkzeugs.

In diesem Fall sind durch die Verstärkungsrippen andererseits Sicken ausgebildet, die in belastungsoptimierter Weise positioniert bzw. dimensioniert sind.

Hierzu können im Vorfeld Belastungsversuche durchgeführt werden, insbesondere Belastungssimulationen, die eine exakte Bestimmung der Verstärkungsrippen in Bezug auf ihre Ausgestaltung und Ortsangabe erlauben.

Bei einer Scheibenbremse, die zwei parallel und abständig zueinander angeordnete Stellspindeln aufweist, die beide die Verschlussplatte durchtreten, sind die Verstärkungsrippen vorzugsweise im Mittenbereich der Verschlussplatte, also zwischen den beiden Durchbrüchen für die Stellspindeln vorgesehen und zwar vorzugsweise quer zur Längserstreckung der Verschlussplatte spiegelsymmetrisch.

Die bereits erwähnte, an der Verschlussplatte anliegende Druckfeder, die sich andererseits an der im Aufnahmeraum angeordneten Traverse abstützt, sind die Verstärkungsrippen außerhalb des Überdeckungsbereiches der Druckfeder platziert, so dass die Druckfeder, bevorzugt eine Schraubenfeder, mit ihrer ringförmigen Anlagefläche voll an der Verschlussplatte anliegt. In an sich bekannter Weise ist lediglich eine zentrale Ausstülpung an der Verschlussplatte vorgesehen, von der ersten Windung der Druckfeder konzentrisch umschlossen ist.

Wie sich überraschend gezeigt hat, kann die neue Verschlussplatte in einer durchgängigen Wandstärke von < 1,5 mm, vorzugsweise 1,2 mm ausgeführt sein, was gegenüber der Wandstärke von 1,75 mm der bekannten Verschlussplatte eine beeindruckende Gewichtsersparnis von mehr als 30 % mit sich bringt.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: einen Teil einer Scheibenbremse nach dem Stand der Technik in einer perspektivischen Ansicht
- Figur 2: eine Verschlussplatte der Scheibenbremse nach dem Stand der Technik in einer Vorderansicht
- Figuren 3-6: jeweils ein Ausführungsbeispiel einer Verschlussplatte einer erfindungsgemäßen Scheibenbremse, jeweils in einer Vorderansicht.

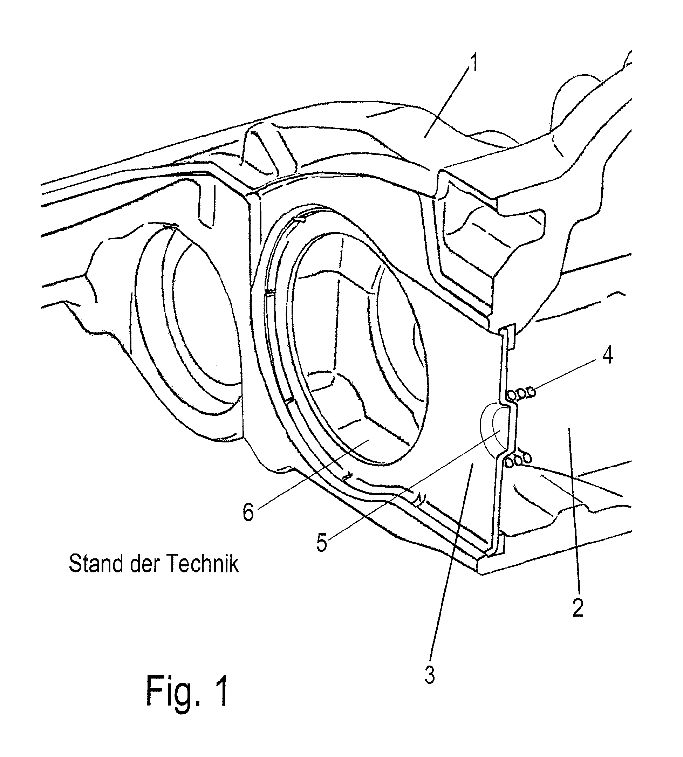

In der Figur 1 ist ein Bremssattel 1 einer Scheibenbremse für ein Nutzfahrzeug nach dem Stand der Technik dargestellt, der einen Aufnahmeraum 2 für Funktionsteile wie einer Zuspanneinrichtung mit einer über einen Bremshebel betätigbaren Traverse und darin gelagerten Stellspindeln aufweist. Dieser Aufnahmeraum 2 ist durch eine Verschlussplatte 3 verschlossen, mit zwei Durchtrittsöffnungen 6, durch die die nicht dargestellten Stellspindeln geführt sind und mit denen bei Betätigung der Zuspanneinrichtung ein Bremsbelag an eine Bremsscheibe pressbar ist.

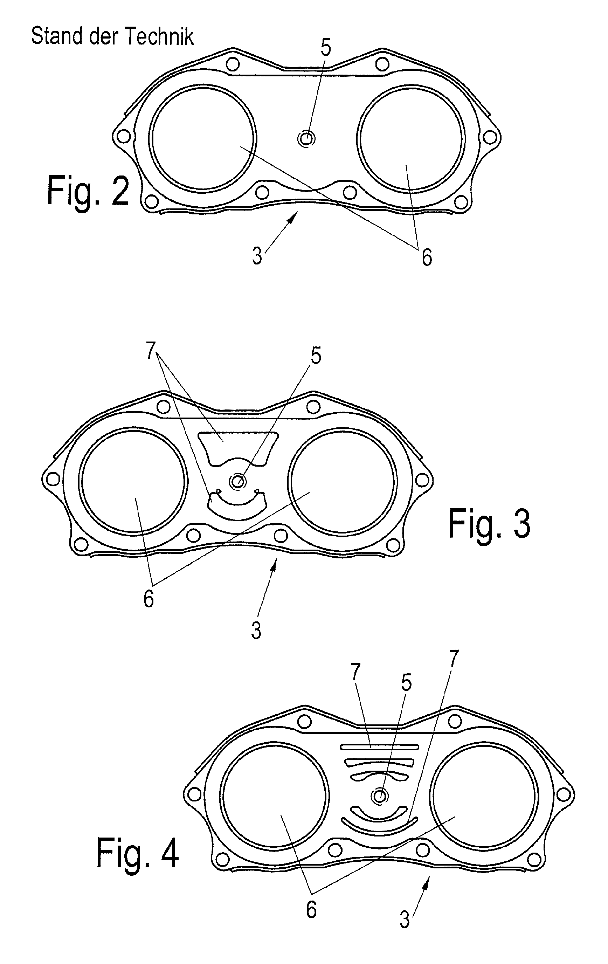

Die Verschlussplatte 3, die zum Stand der Technik auch in der Figur 2 als Einzelheit dargestellt ist, weist etwa mittig, also zwischen den beiden Durchtrittsöffnungen 6 eine zentrale, zum Aufnahmeraum 2 hin gerichtete Ausstülpung 5 auf, die der Zentrierung einer Druckfeder 4 dient, die sich einerseits an der Rückseite der Verschlussplatte 3 und andererseits an der Traverse abstützt.

In den Figuren 3-6 sind verschiedene Ausführungsbeispiele einer erfindungsgemäßen Verschlussplatte 3 gezeigt. Dabei weist jede Verschlussplatte 3 zumindest in den Bereichen hoher Funktionsbelastung Verstärkungsrippen 7 auf, die in den Beispielen in dem zwischen den Durchtrittsöffnungen 6 gebildeten Bereich eingebracht sind, wobei die Rippen 7 in die als Blechformteil ausgebildete Verschlussplatte 3 durch Prägen hergestellt sind.

In der Figur 3 sind ober- und unterhalb der Ausstülpung 5 jeweils eine Rippe 7 ausgebildet, wobei die oberseitige im Grundriss etwa trapezförmig und die unterseitige in Form eines Kreisringabschnitts gestaltet sind.

Die in der Figur 4 gezeigte Verschlussplatte 3 weist oberhalb der Ausstülpung 5 drei Verstärkungsrippen 7 auf, von denen eine obere parallel zur Längserstreckung der Verschlussplatte 3 gerade verläuft und die darunter liegenden zunehmend gekrümmt. Unterhalb der Ausstülpung 5 sind zwei Verstärkungsrippen 7 eingebracht in Form von zur Ausstülpung 5 konzentrischen Kreisbögen.

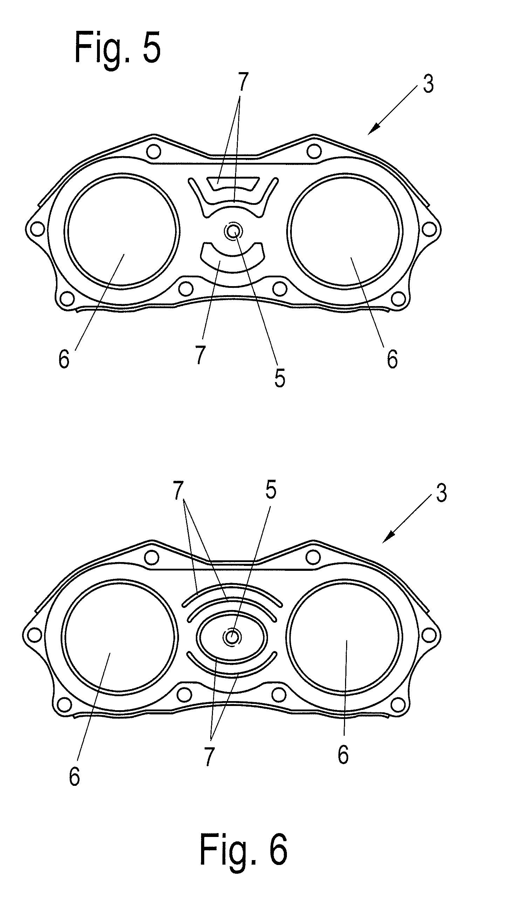

In der Figur 5 sind oberhalb der Ausstülpung 5 zwei Verstärkungsrippen 7 angeordnet, von denen eine der Ausstülpung 5 zugewandte eine U-förmige Kontur mit nach außen schräg gestellten Schenkeln und einem zur Ausstülpung 5 konzentrisch verlaufenden, die Schenkel verbindenden Steg. Unterhalb der Ausstülpung 5 ist eine Verstärkungsrippe 7 als zur Ausstülpung 5 konzentrisch verlaufender Kreisringabschnitt gebildet, vergleichbar dem in der Figur 3.

Wie sich gezeigt hat, ist die Anordnung und Formgebung der Verstärkungsrippen 7 entsprechend der Figur 6 hinsichtlich der Funktionsbelastung optimiert, wobei hier eine Verstärkungsrippe 7 in Form einer die Ausstülpung 5 umschließenden, sich in ihrer größten Ausdehnung hin zu den Durchtrittsöffnungen erstreckenden Ellipse ausgebildet ist, während oberhalb der Ausstülpung 5 und der Ellipse zwei parallel zur Ellipse verlaufende Ellipsenabschnitte als Verstärkungsringe dienen, von denen einer unterhalb der Ellipse angeordnet ist.

In allen Ausführungsbeispielen sind die Verstärkungsrippen 7, bezogen auf die Querachse der Verschlussplatte 3, spiegelsymmetrisch ausgebildet.

## Patentansprüche

1. Scheibenbremse für ein Nutzfahrzeug, mit einem Bremssattel (1), in dem zwei in Funktion gegen eine Bremsscheibe pressbare Bremsbeläge angeordnet sind, von denen ein aktionsseitiger über mindestens eine, vorzugsweise zwei parallel und abständig zueinander verlaufende Stellspindeln mittels einer Zuspanneinrichtung betätigbar ist, wobei die Stellspindeln durch eine einen Aufnahmeraum (2) des Bremssattels (1) zum Bremsbelag hin verschließenden Verschlussplatte (3) geführt sind, **dadurch gekennzeichnet, dass** die Verschlussplatte (3) zumindest in den Bereichen hoher Funktionsbelastung mit Verstärkungsrippen (7) versehen ist.

2. Scheibenbremse nach Anspruch 1, **dadurch gekennzeichnet, dass** die Verstärkungsrippen (7) zwischen zwei Durchtrittsöffnungen (6) zur Durchführung der Stellspindeln angeordnet sind.

3. Scheibenbremse nach Anspruch 1 oder 2, **dadurch gekennzeichnet, dass** die Verstärkungsrippen (7) in die als Blechformteil ausgebildete Verschlussplatte (3) eingeprägt sind.

4. Scheibenbremse nach einem der vorhergehenden Ansprüche, **dadurch gekennzeichnet, dass** die Verstärkungsrippen (7), bezogen auf die Querachse der Verschlussplatte (3) spiegelsymmetrisch angeordnet sind.

5. Scheibenbremse nach einem der vorhergehenden Ansprüche, **dadurch gekennzeichnet, dass** die Verstärkungsrippen (7), bezogen auf die Längsachse der Verschlussplatte (3) ober- und unterhalb einer mittig vorgesehenen Ausstülpung (5) angeordnet sind.

6. Scheibenbremse nach einem der vorhergehenden Ansprüche, **dadurch gekennzeichnet, dass** der durch die Verstärkungsrippen (7) gebildete Verstärkungsfaktor der Verstärkungsrippen (7) oberhalb der Ausstülpung (5) größer ist als der Verstärkungsfaktor der Verstärkungsrippen (7) unterhalb der Ausstülpung (5).

7. Scheibenbremse nach einem der Ansprüche 5 oder 6, **dadurch gekennzeichnet, dass** die Verstärkungsrippen (7) gleichgerichtet zu der Ausstülpung (5) eingeprägt sind.

8. Scheibenbremse nach einem der vorhergehenden Ansprüche, **dadurch gekennzeichnet, dass** die Verschlussplatte (3) eine Wanddicke von < 1,5 mm, vorzugsweise 1,2 mm aufweist.

## Claims

1. Disc brake for a commercial vehicle, comprising a brake calliper (1), in which are located two brake pads which can be pressed against a brake disc in operation and of which an action-side brake pad can be actuated by means of an application device via at least one actuating screw and preferably via two actuating screws extending parallel to and at a distance from one another, the actuating screws being guided through a closing plate (3) closing a reception space (2) of the brake calliper (1) towards the brake pad, **characterised in that** the closing plate (3) is provided with reinforcing ribs (7) at least in the regions of high functional loading.

2. Disc brake according to claim 1, **characterised in that** the reinforcing ribs (7) are arranged between two through-openings (6) for the passage of the actuating screws.

3. Disc brake according to claim 1 or 2, **characterised in that** the reinforcing ribs (7) are embossed into the closing plate (3), which is designed as a sheet metal stamping.

4. Disc brake according to any of the preceding claims, **characterised in that** the reinforcing ribs (7) are arranged in a mirror-symmetric way relative to the transverse axis of the closing plate (3).

5. Disc brake according to any of the preceding claims, **characterised in that** the reinforcing ribs (7) are arranged above and below a centrally located turn-out (5) relative to the longitudinal axis of the closing plate (3).

6. Disc brake according to any of the preceding claims, **characterised in that** the reinforcement factor of the reinforcing ribs (7) as provided by the reinforcing ribs (7) is higher above the turn-out (5) than the reinforcement factor of the reinforcing ribs (7) below the turn-out (5).

7. Disc brake according to claim 5 or 6, **characterised in that** the reinforcing ribs (7) are embossed in the same direction as the turn-out (5).

8. Disc brake according to any of the preceding claims, **characterised in that** the closing plate (3) has a wall thickness of < 1.5 mm, preferably of 1.2 mm.

## Revendications

1. Frein à disque pour un véhicule utilitaire comprenant un étrier (1) de frein dans lequel sont disposées deux garnitures de frein qui, en fonctionnement, peuvent être pressées sur un disque de frein et dont l'une peut, du côté actif, être actionnée au moyen d'un dispositif de serrage par l'intermédiaire d'au moins une, de préférence deux broches de réglage parallèles et s'étendant à distance l'une de l'autre, les broches de réglage passant à travers une plaque (3) de fermeture fermant un espace (2) de réception de l'étrier (1) de frein vers la garniture de frein, **caractérisé en ce que** la plaque (3) de fermeture est pourvue de nervures (7) de renfort au moins dans les régions de grande charge fonctionnelle.

2. Frein à disque suivant la revendication 1, **caractérisé en ce que** les nervures (7) de renfort sont disposées entre deux ouvertures (6) de passage des broches de réglage.

3. Frein à disque suivant la revendication 1 ou 2, **caractérisé en ce que** les nervures (7) de renfort sont estampées dans la plaque (3) de fermeture constituée sous la forme d'une pièce de tôle conformée.

4. Frein à disque suivant l'une des revendications précédentes, **caractérisé en ce que** les nervures (7) de renfort sont disposées symétriquement comme en un miroir par rapport à l'axe transversal de la plaque (3) de fermeture.

5. Frein à disque suivant l'une des revendications précédentes, **caractérisé en ce que** les nervures (7) de renfort sont disposées par rapport à l'axe longitudinal de la plaque (3) de fermeture au-dessus et en dessous d'une protubérance (5) prévue au milieu.

6. Frein à disque suivant l'une des revendications précédentes, **caractérisé en ce que** le facteur de renfort, formé par les nervures (7) de renfort, des nervures (7) de renfort au-dessus de la protubérance (5) est plus grand que le facteur de renfort des nervures (7) en dessous de la protubérance (5).

7. Frein à disque suivant l'une des revendications 5 ou 6, **caractérisé en ce que** les nervures (7) de renfort sont estampées en étant dirigées de la même façon par rapport à la protubérance (5).

8. Frein à disque suivant la revendication 1, **caractérisé en ce que** la plaque (3) de renfort a une épaisseur de paroi de < 1,5 mm, de préférence de 1,2 mm.
